# EUROPEAN PATENT SPECIFICATION

(11) **EP 2 660 569 B1**
(45) Date of publication and mention of the grant of the patent: **31.07.2019**
(21) Application number: 13163943.7
(22) Date of filing: 16.04.2013
(51) Int. Cl.: G01F 23/32, C09D 5/00, C09D 191/06, C09D 193/02, G01F 23/34, G01F 23/36

(54) **Fuel level sensor and method**
Treibstofffüllstandsensor und Verfahren
Capteur de niveau de carburant et procédé

(30) Priority: 25.04.2012 GB 201207205
(43) Date of publication of application: 06.11.2013
(73) Proprietor: Nissan Motor Manufacturing (UK) Ltd., Cranfield Bedfordshire MK43 0DB (GB)
(72) Inventor: Kavanagh, Robert, Cranfield, Bedfordshire MK430DB (GB)

(56) References cited:
- WO-A1-2004/086003
- GB-A- 1 271 156
- US-A- 4 931 764

## Description

### Technical Field of the Invention

The present invention relates to a method of protecting a fuel level sensor during transportation, especially as part of a fuel tank assembly; and to a method of assembling a vehicle.

### Background to the Invention

Most vehicles have a fuel gauge system to provide the driver with an indication of the amount of fuel held in the vehicle's tank. A typical system comprises a sensor unit, sometimes referred to as a sender unit, located in the fuel tank for measuring the level of fuel in the tank. The fuel level sensor unit provides an output indicative of the fuel level that is used, directly or indirectly, to control a display for providing a visual indication of the fuel level to the driver.

One commonly used type of fuel level sensor comprises a variable resistor assembly including a resistor card having at least one resistive area and a wiper for sliding movement across the at least one resistive area. Fuel level sensors of this type will be referred to hereinafter, including in the claims, as "a fuel level sensor of the type defined".

An example of a fuel level sensor of the type defined is illustrated in Figures 1 to 3, where Figure 1 is a perspective, exploded view of a known fuel tank assembly 1 incorporating a fuel level sensor unit 2 of the type defined; Figure 2 is a perspective view of a known fuel level sensor of the type defined; and Figure 3 is a plan view on an enlarged scale of a resistor board forming part of a fuel level sensor unit 2 of the type defined.

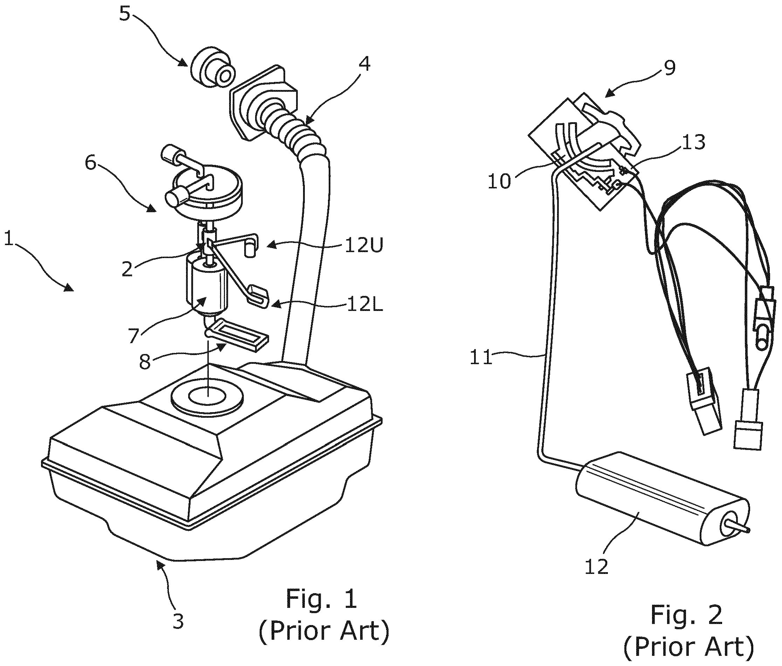

As illustrated in Figure 1, a typical fuel tank assembly 1 comprises a fuel tank 3 for holding a quantity of fuel. The fuel tank has a filler neck 4 through which fuel can be introduced into the tank 3, and a fuel filler cap 5 for selectively closing an inlet to the filler neck 4. The fuel level sensor 2 is provided as part of a fuel pump and sensor sub-assembly 6 which is mountable in the tank 3. The fuel pump and sensor sub-assembly 6 includes the fuel level sensor 2 and a fuel pump 7 for pumping fuel from the tank to the engine of a vehicle in which the tank is fitted, the pump having an inlet filter 8.

The fuel level sensor unit 2, shown on its own and in more detail in Figure 2, includes a resistor assembly 9, whose resistance value is changed by means of mechanical movement of a wiper 10 connected to a float arm 11. The float arm is in turn attached to a float 12, which moves in response to changes in the fuel level in the fuel tank. Float 12 is shown in Fig. 1 in its uppermost position 12U, corresponding to a full tank; and in its lowermost position 12L, corresponding to an empty tank. The variable resistor assembly 9 includes a resistor board 13 having a substrate 14, which may be ceramic; and on which two separate, concentrically arranged arcuate resistive areas 15, 16 are provided. Each of the arcuate resistive areas 15, 16 are segmented into a plurality of conductive contact segments 17, 18 respectively. The wiper has a pair of contacts (not shown) which engage with the conductive contact segments 17, 18 to bridge resistive areas 15, 16, completing the variable resistor circuit. As the level of fuel within the fuel tank changes, the float 12 and float arm 11 move, causing the wiper 10 to slide over the arcuate resistive areas 15, 16. This changes the effective resistance of the variable resistor; and hence, the output voltage of the resistor board. When fuel level sensor unit 2 is mounted in a fuel tank 3, the resistor assembly 9 and wiper 10 are exposed to the fuel in the tank.

During normal use, the wiper 10 moves slowly across the resistor contacts 17, 18 on the resistor board 13 as the fuel level in the tank rises and falls. However, when the tank is empty, vibrations to the tank can cause fretting between wiper 10 and the resistor board 13; damaging the contacts on both the wiper 10 and the board 13. This can lead to total failure of the sensor 2; or to premature wear of the contacts, and therefore subsequent failure in use. This is a particular issue when it comes to the transportation of empty fuel tank assemblies including a fuel level sensor unit 2 prior to the fuel tank assembly being fitted to a vehicle, especially if transported by road over rough terrain.

Often a fuel tank assembly, including at least the tank and a fuel level sensor, will be manufactured at one location; and then has to be transported to a different location for assembly to a vehicle. As part of the manufacturing process, it is known to mount a fuel level sensor, often as part of a fuel pump and sensor sub-assembly, to a fuel tank for testing, and to then separate the two for transportation to a vehicle assembly plant, so that the fuel level sensor 2 is not damaged due to fretting as described above during transportation. The fuel level sensor unit 2 is subsequently refitted to the tank at the vehicle assembly plant, and a first fill of fuel introduced into the tank. The need to remove a fuel level sensor from a fuel tank for transportation, and to subsequently re-fit the fuel level sensor, introduces several additional steps in the manufacturing and assembly process; and so is inefficient.

A fuel tank level sensor resistor card with an additional layer of thick film resistive material is known from US 4,931,764.

A sensor assembly with a partial protective layer and an exposed sensing surface is known from WO2004/086,003.

There is a need then for an improved fuel level sensor that overcomes, or at least mitigates, some or all of the disadvantages of the known sensors.

There is also a need for a method of protecting a fuel level sensor during transportation, especially when assembled to a fuel tank as part of a fuel tank assembly. (Such protection is no longer needed when the vehicle is assembled and sold, as the fuel level sensor is usually immersed in fuel, damping movements of the float arm. If the sensor is not immersed in fuel, the vehicle is not likely to move).

### Summary of the Invention

According to a first aspect of the invention, there is provided a method of protecting a fuel tank assembly during transportation, said fuel tank assembly comprising a fuel tank and a fuel level sensor of the type defined for measuring the level of a fuel in the fuel tank; the sensor comprising a wiper and at least one resistive area; the method comprising: application before the fuel level sensor is assembled to the fuel tank of a temporary barrier layer of material to damp movement between the wiper and the at least one resistive area; characterized in that: the temporary barrier layer (19) is formed of a material and is applied in a thickness such that it will dissolve when submerged in the fuel on a first filling of the fuel tank (3).

The barrier layer may be formed of a material dissolvable in diesel and/or petrol. The barrier layer may be formed of a material selected from the group consisting of petroleum jelly and shellac resin.

The barrier layer may have a thickness sufficient to substantially eradicate fretting between the wiper and the at least one resistive area; but also sufficiently thin that the barrier layer can be dissolved when submerged in the fuel. Preferably, the barrier layer is configured so as to dissolve in the fuel, leaving substantially no residue that would adversely affect the operation of the sensor. The barrier layer may have a thickness in the range of 3 to 25 microns, or a thickness in the range of 5 to 15 microns, or a thickness in the range of 8 to 12 microns. In one embodiment, the barrier layer has a thickness of 10 microns ± 5 microns.

The fuel level sensor may be part of a fuel pump and sensor sub-assembly fitted to the fuel tank.

The method may comprise subsequently fitting the fuel level sensor with the temporary barrier layer over the at least one resistive area to a fuel tank to form a fuel tank assembly; and subsequently transporting the fuel tank assembly to a vehicle assembly plant.

In accordance with a second aspect of the invention, there is provided a method of assembling a vehicle, wherein the method comprises the fuel tank assembly being protected during transportation as described above, characterized in that: after assembly of the fuel tank assembly to a vehicle, the fuel tank is filled with a sufficient quantity of fuel to dissolve the barrier layer.

### Detailed Description of the Invention

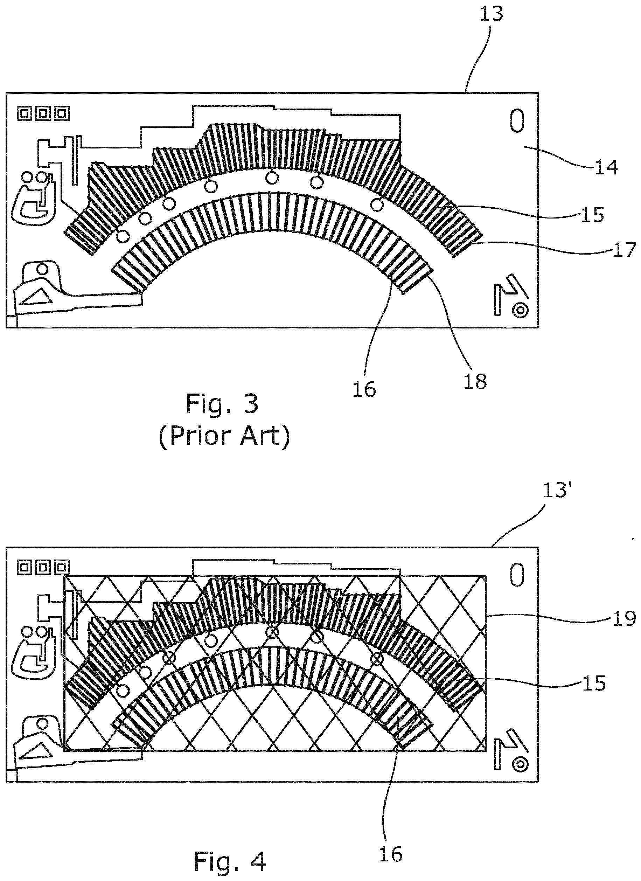

In order that the invention may be more clearly understood, an embodiment thereof will now be described - by way of example only - with reference to the remaining drawing Figure 4; which is a view similar to that of Figure 3, but showing a resistor board 13' forming part of a fuel level sensor of the type defined in accordance with an embodiment of the invention.

In accordance with the invention, it is proposed to apply a temporary barrier layer of material 19 to the resistor board 13' covering at least the resistive areas 15, 16 to act as a damping element between the board 13' and the wiper 10 during transportation so as to prevent, or at least significantly reduce, the occurrence of fretting. In all other respects, the resistor board 13' and the fuel level sensor unit 2 in which it is fitted are identical to the known board 13 and fuel level sensor 2 as described above, to which the reader should refer for details. The barrier layer may extend across all or part of the board substrate on which the resistive areas are mounted as shown; or may be applied exclusively over the resistive areas.

The material used to form the barrier layer 19 is selected so as to be dissolvable in the type of fuel that is intended to be held in an associated fuel tank to which the sensor is to be fitted. The material for the barrier layer 19 may also be soluble in the fuel. Preferably, the barrier layer 19 should be capable of dissolving in the fuel, so as not to leave any residue on the resistor card 13' that might adversely affect the operation of the sensor.

In a typical application, the fuel level sensor 2 will be used to measure the level of diesel or petrol (gasoline) in a vehicle fuel tank, in which case the material from which the barrier layer 19 is formed will be dissolvable in the respective fuel type. Suitable materials for the barrier layer 19 that are dissolvable in diesel or petrol include petroleum jelly and shellac resin. Petroleum jelly is particularly advantageous, as it is a semi-solid mixture of hydrocarbons that will dissolve into its constituent parts within the fuel without leaving a residue; and hence, will not adversely affect the fuel and its subsequent combustion. Other suitable materials for the barrier layer 19 can be readily identified by persons skilled in the art, depending on the type of fuel.

The thickness of the barrier layer 19 is controlled such that the barrier layer 19 is effective in eliminating fretting between the wiper 10 and the board 13' when the sensor 2 is transported as part of an empty fuel tank assembly; but is sufficiently thin to enable the coating to dissolve when submerged in fuel on first filling of the fuel tank. Those skilled in the art will have no difficulty in establishing a suitable thickness for the barrier layer 19 in any particular application; depending on various factors, such as the nature of the material used for the barrier layer 19, and the amount of vibration the fuel tank assembly is expected to be subjected to during transportation. However, it is believed that a barrier layer 19 having a thickness in the range of 3 to 25 microns, and more particularly a thickness in the range of 5 to 15 microns, and even more particularly a thickness in the range of 8 to 12 microns, will be suitable. In one particular example, a barrier layer 19 of petroleum jelly is applied to the resistor card 13'over the resistive areas 15, 16 with a thickness of 10 microns ± 5 microns.

The barrier layer 19 can be applied to the resistor board 13' by any suitable method, such as spraying. In one embodiment, the barrier layer 19 is applied to the resistor board 13' prior to it being assembled into the fuel level sensor unit 2. Once the fuel level sensor unit 2 is complete, it is assembled to a fuel tank 3, often as part of a fuel pump sub-assembly, to form a fuel tank assembly 1, which may or may not include a filler neck 4 and filler cap 5. The fuel tank assembly 1 can then be transported to a vehicle assembly plant by any suitable means, such as road, rail or air. During transportation, particularly if transported by road over rough terrain, the fuel tank assembly 1 may be subject to vibrations and other shocks that cause the float arm 11 and hence the wiper 10 to vibrate or otherwise move against the resistor board 13'; but the barrier layer 19 acts as a damping element, preventing such movement of the wiper 10 damaging the contacts on the wiper 10 and/ or on the resistor board 13'.

Once delivered to the vehicle assembly plant, the fuel tank assembly is fitted to a vehicle and at least partially filled with fuel to a level that submerges the resistor board 13' such that the barrier layer 19 is dissolved, enabling the fuel level sensor to operate as normal.

Use of a barrier layer 19 to protect the contacts of the resistor board 13' and wiper 10 from damage due to fretting during transportation enables a fuel tank assembly 1 to be transported to a vehicle assembly plant complete with the fuel level sensor 2 ready for fitting to a vehicle. This eliminates the need to assemble the fuel level sensor 2 to the fuel tank at the vehicle assembly plant.

Whilst in the present embodiment the resistor board 13' has two resistive areas 15, 16, it will be appreciated that the invention can be adapted for use with fuel level sensors of the type defined regardless of the number of resistive areas or the precise layout of the resistive areas, by simply applying a barrier layer of a material dissolvable in the fuel to cover any resistive areas or other regions of the board with which the wiper may be brought into contact during transportation.

The above embodiment is described by way of example only. Many variations are possible without departing from the scope of the invention as defined in the appended claims.

## Claims

1. A method of protecting a fuel level sensor in a fuel tank assembly (1) during transportation, said fuel tank assembly comprising a fuel tank (3) and a fuel level sensor (2) of the type defined for measuring the level of a fuel in the fuel tank; the sensor (2) comprising a wiper (10) and at least one resistive area (15, 16); the method comprising:
application before the fuel level sensor (2) is assembled to the fuel tank (3) of a temporary barrier layer (19) of material to damp movement between the wiper (10) and the at least one resistive area (15, 16);
**characterized in that**:
the temporary barrier layer (19) is formed of a material and is applied in a thickness such that it will dissolve when submerged in the fuel on a first filling of the fuel tank (3).

2. A method as claimed in claim 1, wherein the barrier layer (19) is formed of a material dissolvable in diesel and/or petrol.

3. A method as claimed in claim 1 or claim 2, wherein the barrier layer (19) is formed of a material selected from the group consisting of petroleum jelly and shellac resin.

4. A method as claimed in any one of the preceding claims, wherein the barrier layer (19) has a thickness sufficient to substantially eradicate fretting between the wiper (10) and the at least one resistive area (15, 16), but such that the barrier layer (19) can be dissolved when submerged in the fuel.

5. A method as claimed in any one of the preceding claims, wherein the barrier layer (19) has a thickness in the range of 3 to 25 microns, or in the range of 5 to 15 microns, or in the range of 8 to 12 microns.

6. A method of assembling a vehicle, wherein the fuel tank assembly (1) is protected during transportation according to the method as claimed in any preceding claim;
**characterized in that**:
after assembly of the fuel tank assembly (2) to the vehicle, the fuel tank (3) is filled with a sufficient quantity of fuel to dissolve the barrier layer (19).

## Patentansprüche

1. Verfahren zum Schutz eines Kraftstoffpegelsensors in einer Kraftstofftankanordnung (1) während des Transports, wobei die Kraftstofftankanordnung einen Kraftstofftank (3) und einen Kraftstoffpegelsensor (2) des Typs, der für die Messung des Kraftstoffpegels in dem Kraftstofftank definiert ist, umfasst;
Sensor (2) einen Wischer (10) und mindestens einen Widerstandsbereich (15, 16) umfasst;
wobei das Verfahren umfasst:
Auftragen, bevor der Kraftstoffpegelsensor (2) in den Kraftstofftank (3) montiert wird, einer provisorischen Barriereschicht (19) des Materials, um die Bewegung zwischen dem Wischer (10) und dem mindestens einen Widerstandsbereich (15, 16) zu dämpfen;
**dadurch gekennzeichnet, dass**:
die provisorische Barriereschicht (19) aus einem Material besteht und in einer Dicke aufgetragen wird, so dass sie sich auflöst, wenn sie bei einem ersten Füllen des Kraftstofftanks (3) in den Kraftstoff eingetaucht wird.

2. Verfahren nach Anspruch 1, wobei die Barriereschicht (19) aus einem Material besteht, das sich in Diesel und/oder Benzin auflösen kann.

3. Verfahren, nach Anspruch 1 oder Anspruch 2, wobei die Barriereschicht (19) aus einem Material besteht, das aus der Gruppe aus Petroleumgelee und Schellackharz ausgewählt wurde.

4. Verfahren nach einem der vorhergehenden Ansprüche, wobei die Barriereschicht (19) eine Dicke aufweist, die ausreicht, um den Fressverschleiß zwischen dem
Wischer (10) und dem mindestens einen Widerstandsbereich (15, 16) zu beseitigen, aber so, dass sich die Barriereschicht (19) auflösen kann, wenn sie in den Kraftstoff eingetaucht wird.

5. Verfahren nach einem der vorhergehenden Ansprüche, wobei die Barriereschicht (19) eine Dicke im Bereich von 3 bis 25 Mikrometern, oder im Bereich von 5 bis 15 Mikrometern oder im Bereich von 8 bis 12 Mikrometern aufweist.

6. Verfahren zum Montieren eines Fahrzeugs, wobei die Kraftstofftankanordnung (1) während des Transports gemäß dem Verfahren nach einem der vorhergehenden Ansprüche geschützt ist;
**dadurch gekennzeichnet, dass**:
nach dem Montieren der Kraftstofftankanordnung (2) an dem Fahrzeug der Kraftstofftank (3) mit einer ausreichenden Menge an Kraftstoff gefüllt wird, um die Barriereschicht aufzulösen (19).

## Revendications

1. Procédé de protection d'un capteur de niveau de carburant dans un ensemble réservoir de carburant (1) pendant le transport, ledit ensemble réservoir de carburant comprenant un réservoir de carburant (3) et un capteur de niveau de carburant (2) du type défini pour mesurer le niveau du carburant dans le réservoir de carburant ;
le capteur (2) comprenant un essuyeur (10) et au moins une zone résistive (15, 16) ;
le procédé comprenant :
l'application, avant le montage du capteur de niveau de carburant (2) sur le réservoir de carburant (3), d'une couche barrière temporaire (19) de matériau pour amortir le mouvement entre l'essuyeur (10) et l'au moins une zone résistive (15, 16) ;
**caractérisé en ce que** :
la couche barrière temporaire (19) est formée d'un matériau et est appliquée à une épaisseur telle qu'elle se dissout lorsqu'elle est immergée dans le carburant lors d'un premier remplissage du réservoir de carburant (3).

2. Procédé selon la revendication 1, dans lequel la couche barrière (19) est formée d'un matériau soluble dans le diesel et/ou l'essence.

3. Procédé selon la revendication 1 ou 2, dans lequel la couche barrière (19) est formée d'un matériau choisi dans le groupe constitué par la gelée de pétrole et la résine gomme-laque.

4. Procédé selon l'une quelconque des revendications précédentes, dans lequel la couche barrière (19) a une épaisseur suffisante pour éradiquer sensiblement toute usure de contact entre
l'essuyeur (10) et l'au moins une zone résistive (15, 16), mais de sorte que la couche barrière (19) puisse être dissoute lorsqu'elle est immergée dans le carburant.

5. Procédé selon l'une quelconque des revendications précédentes, dans lequel la couche barrière (19) a une épaisseur comprise entre 3 et 25 microns, ou entre 5 et 15 microns, ou entre 8 et 12 microns.

6. Procédé d'assemblage d'un véhicule, dans lequel l'ensemble réservoir de carburant (1) est protégé pendant le transport selon l'une des revendications précédentes ;
**caractérisé en ce que** :
après le montage du réservoir de carburant (2) sur le véhicule, le réservoir de carburant (3) est rempli d'une quantité de carburant suffisante pour dissoudre la couche barrière (19).
